# EUROPÄISCHE PATENTSCHRIFT

(11) **EP 2 850 333 B1**
(45) Veröffentlichungstag und Bekanntmachung des Hinweises auf die Patenterteilung: **18.04.2018**
(21) Anmeldenummer: 13718788.6
(22) Anmeldetag: 26.04.2013
(51) Int. Cl.: F16D 65/12

(54) **BREMSSCHEIBE**
BRAKE DISK
DISQUE DE FREIN

(30) Priorität: 15.05.2012 DE 102012009659
(43) Veröffentlichungstag der Anmeldung: 25.03.2015
(73) Patentinhaber: Daimler AG, 70327 Stuttgart (DE)
(72) Erfinder: FAUTH, Andreas, 70197 Stuttgart (DE); MAYER, Ralph, 71034 Böblingen (DE)
(74) Vertreter: JENSEN & SON
(86) Internationale Anmeldenummer: PCT/EP2013/001263
(87) Internationale Veröffentlichungsnummer: WO 2013/170926

(56) Entgegenhaltungen:
- DE-A1-102008 038 369
- DE-A1-102009 012 216
- DE-A1-102009 012 217

## Beschreibung

Die vorliegende Erfindung betrifft eine Bremsscheibe mit einem Topf und einem Reibring.

Bremsscheiben sind typischerweise Bestandteile einer Bremseinrichtung eines Fahrzeuges, insbesondere eines Kraftfahrzeuges. Hierbei weist eine solche Bremsscheibe einen Reibring und einen Topf auf, wobei der Reibring und der Topf, insbesondere bei einer als Verbundbremsscheibe ausgestalteten Bremsscheibe, miteinander verbunden sind. Derartige Verbundbremsscheiben ermöglichen beispielsweise ein niedrigeres Gewicht und tragen somit zur Gewichtsreduzierung des zugehörigen Fahrzeuges bei.

Eine Bremsscheibe ist beispielsweise aus der DE 10 2009 012 217 A1 bekannt. Hierbei weisen der Reibring und der Topf jeweils eine Verzahnung auf, wobei diese Verzahnungen miteinander in Eingriff stehen, um eine Drehmomentübertragung zwischen dem Reibring und dem Topf zu ermöglichen. Um auch eine axiale Sicherung zwischen dem Reibring und dem Topf zu gewährleisten, weist der Topf an einer Oberkante radial nach außen gerichtete Halteelemente auf, welche an einer korrespondierenden Fläche des Reibringes anliegen. Problematisch hierbei ist, dass eine derartige axiale Sicherung zwischen dem Reibring und dem Topf zu einem axialen Versatz des Reibringes relativ zum Topf führen kann, was insbesondere zu Planlaufabweichungen und damit verbunden zu einer Dickenschwankung des Reibringes führt. Derartige Dickenschwankungen des Reibrings haben dabei insbesondere ein sogenanntes Bremsrubeln zur Folge, bei dem während des Bremsvorganges, das heißt während der Einwirkung zugehöriger Bremsbacken und dergleichen auf den Reibring, Vibrationen auf das zugehörige Fahrzeug übertragen werden.

Eine gattungsgemäße Bremsscheibe geht aus der DE 10 2009 012 216 A1 hervor.

Die vorliegende Erfindung beschäftigt sich mit dem Problem, für eine Bremsscheibe der gattungsgemäßen Art eine verbesserte oder zumindest andere Ausführungsform anzugeben, die sich insbesondere durch eine vereinfachte Montage und/oder durch eine verbesserte axiale Sicherung auszeichnet.

Dieses Problem wird erfindungsgemäß durch die Merkmale des Anspruchs 1 gelöst. Vorteilhafte Ausführungsformen sind Gegenstand der abhängigen Ansprüche.

Die vorliegende Erfindung beruht auf dem allgemeinen Gedanken, eine axiale Sicherung zwischen dem Topf und dem Reibring mit Hilfe von Auskerbungen zu gewährleisten, welche an zumindest einer Topfzahnlücke einer Topfverzahnung des Topfes ausgeformt sind und somit einerseits eine axiale Sicherung zwischen dem Reibring und dem Topf zu erreichen, die eine insbesondere im Vergleich zu aus dem Stand der Technik bekannten Lösungen erhöhte Elastizität aufweist, so dass bei Einwirken axialer Kräfte zwischen dem Reibring und dem Topf eine dauerhafte axiale Verschiebung des Reibringes relativ zum Topf verhindert oder zumindest reduziert ist. Des Weiteren ist durch eine derartige axiale Sicherung die Montage bzw. die Herstellung der Bremsscheibe vereinfacht. Dabei ist die Topfverzahnung an einer Wand des Topfes ausgebildet, welche von einem Boden des Topfes absteht und umlaufend verläuft. Die Topfverzahnung weist radial nach außen vorstehende Topfzähne auf, welche in Umfangsrichtung von je einer solchen Topfzahnlücke voneinander getrennt sind. Der Topf steht mittels der Topfverzahnung mit einer Ringverzahnung des Reibringes in Eingriff, wobei die Ringverzahnung an einer Reibringöffnung des Reibringes ausgebildet ist und radial nach innen vorstehende Ringzähne aufweist, welche in Umfangsrichtung von je einer Ringzahnlücke getrennt sind. Der Eingriff der Topfverzahnung mit der Ringverzahnung ist also dadurch realisiert, dass radial nach außen vorstehende Topfzähne mit Ringzahnlücken in Eingriff stehen, während radial nach innen vorstehende Ringzähne mit Topfzahnlücken in Eingriff stehen. Erfindungsgemäß ist an wenigstens einer ersten Topfzahnlücke eine solche Auskerbung ausgeformt, welche radial nach außen absteht und den jeweiligen, mit dieser zweiten Topfzahnlücke in Eingriff stehenden Ringzahn an einem ersten axialen Ende radial übergreift. Die Radialrichtung verläuft hierbei senkrecht zur Axialrichtung, wobei die Axialrichtung insbesondere bezüglich einer Drehachse der Bremsscheibe gegeben ist. Bei der erfindungsgemäßen Bremsscheibe ist eine Drehmomentübertragung zwischen dem Reifen und dem Topf also mit Hilfe der in Eingriff stehenden Ringverzahnung und Topfverzahnung realisiert, während die axiale Sicherung zwischen dem Reibring und dem Topf insbesondere mit Hilfe der Auskerbung realisiert ist.

Die Auskerbung kann durch ein Deformieren des ersten axialen Endes der zugehörigen ersten Topfzahnlücke hergestellt sein. Ferner ist die Auskerbung bevorzugt mittig an der zugehörigen ersten Topfzahnlücke ausgebildet.

Zweckmäßig ist die Reibringöffnung mittig im Reibring angeordnet, während der Topf konzentrisch zum Reibring bzw. zur Reibringöffnung angeordnet ist. Die Verbindung zwischen der Bremsscheibe und einem zugehörigen Fahrzeug erfolgt hierbei bevorzugt mit Hilfe des Topfes, insbesondere des Bodens des Topfes. Hierzu kann der Boden des Topfes beispielsweise Verbindungsöffnungen aufweisen, durch die die Bremsscheibe mit einer Radaufhängung, insbesondere einer Radnabe der Radaufhängung, des zugehörigen Fahrzeuges verbunden, insbesondere verschraubt werden kann. Erfindungsgemäß ist an wenigstens einer zweiten Topfzahnlücke der Topfverzahnung eine Lasche ausgeformt, die radial nach außen absteht und den jeweiligen, mit dieser zweiten Topfzahnlücke in Eingriff stehenden Ringzahn an dem ersten axialen Ende radial übergreift. Mit anderen Worten die Topfverzahnung weist zwei unterschiedliche Arten von solchen Topfzahnlücken, nämlich die zumindest eine erste Topfzahnlücke und die zumindest eine zweite Topfzahnlücke auf, welche sich insbesondere dadurch unterscheiden, dass die erste Topfzahnlücke besagte Auskerbung aufweist, während die zweite Topfzahnlücke besagte Lasche aufweist. Hierbei trägt auch die radial nach außen abstehende und den zugehörigen Ringzahn radial übergreifende Lasche zur axialen Sicherung des Reibringes relativ zum Topf bei, wobei die Auskerbung und die Lasche bevorzugt am gleichen axialen Ende der zugehörigen ersten Topfzahnlücke bzw. zweiten Topfzahnlücke ausgeformt sind. Dementsprechend gewährleisten die Auskerbung und die Lasche die axiale Sicherung entlang einer axialen Richtung, wobei die Auskerbung und die Lasche bevorzugt an dem vom Boden abgewandten Ende der erste Topfzahnlücke bzw. der zweiten Topfzahnlücke ausgeformt sind, so dass sie die Axialsicherung in die zum Boden weisende axiale Richtung gewährleisten. Die kombinierte Verwendung der Auskerbung und der Lasche nutzt dabei die Kenntnis, dass während die Auskerbung besagte elastische Sicherung gewährleistet, die Lasche erhöhten axialen Kräften standhalten kann, so dass durch die Kombination der Auskerbung und der Lasche sowohl die vorteilhafte elastische Eigenschaft der Axialsicherung als auch eine erhöhte Stabilität der Axialsicherung erreicht wird.

Die Lasche unterscheidet sich von der Auskerbung beispielsweise dadurch, dass sie aus der zugehörigen zweiten Topfzahnlücke durch Deformieren eines freigeschnittenen Bereichs ausgebildet sein kann, während die Auskerbung, wie zuvor erwähnt, durch Deformieren der zugehörigen ersten Topfzahnlücke ausgebildet sein kann, ohne dass hierbei ein Bereich freigeschnitten werden muss.

Vorteilhaft weist die Topfverzahnung zwei oder mehrere solche erste Topfzahnlücken auf, die jeweils eine solche zugehörige Auskerbung aufweisen. Auch ist es vorteilhaft, die Topfverzahnung mit zwei oder mehreren solchen zweiten Topfzahnlücken auszustatten, die jeweils eine solche zugehörige Lasche aufweisen. Weiterhin weist die Topfverzahnung mehrere solche erste Topfzahnlücken mit jeweils einer solchen zugehörigen Auskerbung und mehrere solche zweite Topfzahnlücken mit jeweils einer solchen zugehörigen Lasche auf, wobei die ersten Topfzahnlücken und die zweiten Topfzahnlücke bevorzugt in Umfangsrichtung gleichmäßig angeordnet sind, um eine gleichmäßige Nutzung besagter Vorteile, also die elastische und stabile axiale Sicherung zwischen dem Reibring und dem Topf, zu gewährleisten. Insbesondere sind solche erste Topfzahnlücken und solche zweite Topfzahnlücken in Umfangsrichtung abwechselnd zwischen jeweils benachbarten Topfzähnen angeordnet.

Zur Erhöhung der durch die Zusammenwirkung der Auskerbung mit dem zugehörigen Ringzahn gewährleisteten axialen Sicherung zwischen dem Reibring und dem Topf, kann der mit der ersten Topfzahnlücke in Eingriff stehende Ringzahn, welcher nachfolgend als erster Ringzahn bezeichnet wird, an seinem ersten axialen Ende eine Fase aufweisen. Dabei greift die Auskerbung radial in besagte Fase ein, so dass eine größere Fläche der Auskerbung mit dem zugehörigem ersten Ringzahn in Kontakt steht und sich somit eine größere Fläche der Auskerbung an dem ersten Ringzahn abstützt. Damit ist insbesondere besagte, durch die Zusammenwirkung der Auskerbung und des ersten Ringzahns gewährleistete, axiale Sicherung erhöht bzw. verbessert.

Die Fase kann im Prinzip eine beliebige Form aufweisen. Bevorzugt weist die Fase, welche axial ausgeformt sein kann, eine gekrümmte Kontur auf, um besagten Kontakt zwischen der Auskerbung und dem zugehörigen ersten Ringzahn zu maximieren oder zumindest zu erhöhen.

Auch ist es denkbar, den jeweiligen, mit der die Lasche aufweisenden zweiten Topfzahnlücke in Eingriff stehenden Ringzahn mit einer entsprechenden Fase bzw. Ausnehmung an seinem ersten axialen Ende auszustatten, um, ähnlich wie bei der Fase der ersten Ringzahnlücke, eine verbesserte axiale Sicherung zu erreichen.

Bevorzugt ist die Auskerbung mittig bezüglich einer Breite der zugehörigen ersten Topfzahnlücke angeordnet, wobei die Breite der jeweiligen Topfzahnlücke entlang der Umfangsrichtung gegeben ist. Die bezüglich der Breite mittige Anordnung der Auskerbung heißt jedoch nicht zwangsläufig, dass eine zur Ausformung der Auskerbung nötige Umformung der zugehörigen ersten Topfzahnlücke am ersten axialen Ende ausschließlich mittig bezüglich der Breite der zugehörigen ersten Topfzahnlücke realisiert ist. Vielmehr ist die mittige Anordnung der Auskerbung bezüglich einer durch die Auskerbung entstehenden und radial nach innen gerichteten Vertiefung der zugehörigen ersten Topfzahnlücke am ersten axialen Ende gegeben.

Die an der zweiten Topfzahnlücke ausgeformte Lasche kann prinzipiell auf beliebige Art und Weise hergestellt sein. Insbesondere kann die Lasche in der zugehörigen zweiten Topfzahnlücke freigeschnitten sein. Hierbei kann sich die Lasche beliebig entlang der Breite der zugehörigen zweiten Topfzahnlücke erstrecken. Bevorzugt sind jedoch Ausführungsformen, bei denen sich die Lasche entlang der gesamten Breite der zugehörigen zweiten Topfzahnlücke erstreckt, um einen möglichst hohen Widerstand gegenüber axial einwirkender Kräfte aufzuweisen.

Wie bereits erwähnt, gewährleisten die Auskerbung und die Lasche durch das Zusammenwirken mit den zugehörigen Ringzähnen, die axiale Sicherung zwischen dem Reibring und dem Topf bevorzugt in einer axialen Richtung. Um die axiale Sicherung zwischen dem Reibring und dem Topf auch in die andere axiale Richtung zu gewährleisten, weist die Topfverzahnung bevorzugt zumindest einen Vorsprung auf, der an einer solchen zugehörigen Topfzahnlücke ausgebildet ist und radial nach außen absteht und dabei den jeweiligen, mit dieser Topfzahnlücke in Eingriff stehenden Ringzahn an einem zweiten axialen Ende radial übergreift. Hierbei ist der Vorsprung bevorzugt an einem dem Boden zugewandten zweiten axialen Ende der zugehörigen Topfzahnlücke ausgebildet bzw. ausgeformt. Zweckmäßig weist die Topfverzahnung mehrere derartige Vorsprünge auf, wobei die Vorsprünge an einer solchen ersten Topfzahnlücke und/oder an einer solchen zweiten Topfzahnlücke und/oder an einer anderen Topfzahnlücke ausgebildet bzw. ausgeformt sein können. Zweckmäßig sind auch die Vorsprünge gleichmäßig entlang der Umfangsrichtung verteilt, um die entsprechende Axialsicherung gleichmäßig zu gewährleisten.

Bei weiteren bevorzugten Ausführungsformen weist die Wand des Topfes eine konische Form auf oder ist in einem Axialabschnitt konisch geformt. Dementsprechend weist die Wand beispielsweise an dem dem Boden zugewandten Ende einen kleineren Außendurchmesser auf als an dem vom Topfboden abgewandten Ende. Somit ist insbesondere eine zusätzliche axiale Sicherung erreicht, da die Verschiebbarkeit des Reibringes relativ zum Topf in die entsprechende Axialrichtung unterbunden oder zumindest reduziert ist.

Es versteht sich, dass ein solcher erfindungsgemäß ausgebildeter Topf sowie ein solcher erfindungsgemäß ausgebildeter Reibring auch jeweils als Solche zum Umfang dieser Erfindung gehören.

Ferner sei darauf hingewiesen, dass das erste axiale Ende und das zweite axiale Ende selbstverständlich vertauschbar sind, ohne den Erfindungsgedanken grundlegend zu beeinflussen oder den Rahmen dieser Erfindung zu verlassen.

Dabei kann die Bremsscheibe insbesondere dadurch hergestellt werden, dass der Topf, bei dem die Auskerbungen der ersten Topfzahnlücken noch nicht ausgeformt sind, derart in die Reibringöffnung des Reibrings eingesetzt wird, dass jeweils eine Topfzahnlücke und ein Ringzahn sowie eine Ringzahnlücke und ein Topfzahn in Eingriff stehen. Anschließend wird die jeweilige Auskerbung durch Deformieren des ersten axialen Endes der zugehörigen ersten Topfzahnlücke hergestellt. Bevorzugt erfolgt das Deformieren des ersten axialen Endes der zugehörigen ersten Topfzahnlücke zur Herstellung der Auskerbung spanlos. Hierbei kann beispielsweise ein entsprechendes Werkzeug bzw. eine entsprechende Einrichtung, welche die erste Topfzahnlücke am ersten axialen Ende deformiert, dienen.

Die Ausformung der jeweiligen Lasche kann dabei analog verlaufen, wobei die nicht deformierte Lasche der zweiten Topfzahnlücke zumindest bereichsweise radial in Richtung des zugehörigen zweiten Ringzahns deformiert wird. Hierbei erfolgt das Deformieren der Lasche bevorzugt durch Verstellen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine räumliche Ansicht einer teilweise montierten Bremsscheibe von innen,
- Fig. 2: einen Schnitt durch eine Bremsscheibe im Bereich einer Lasche,
- Fig. 3: eine räumliche Ansicht eines Reibrings,
- Fig. 4: eine räumliche Ansicht eines Topfes.

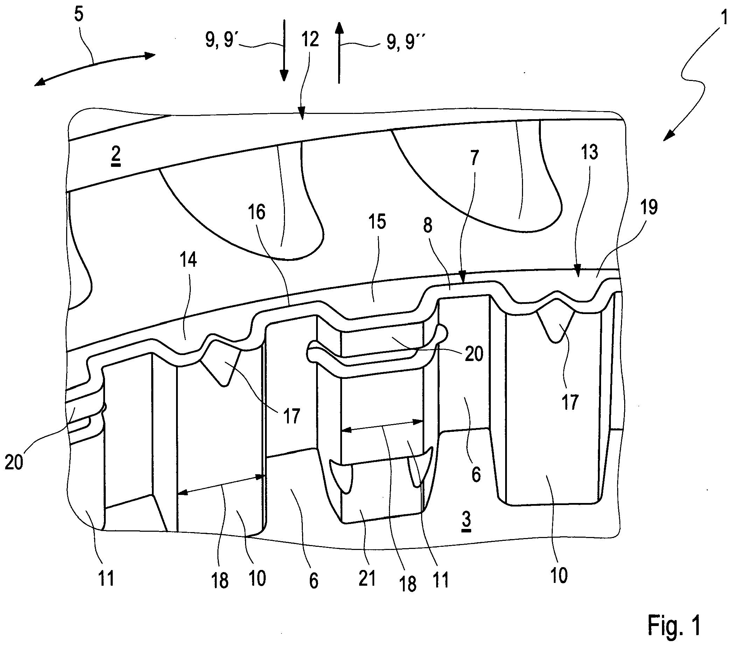

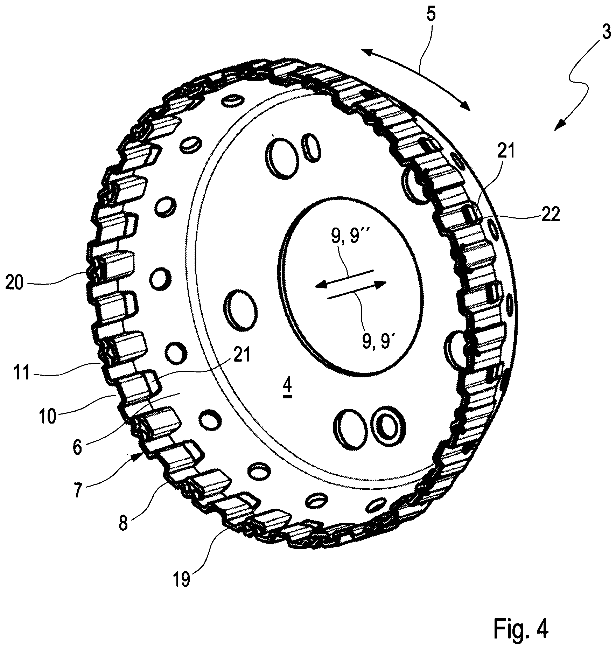

Fig. 1 zeigt eine Bremsscheibe 1 während der Montage bzw. während der Herstellung. Hierbei umfasst die Bremsscheibe 1 einen Reibring 2 sowie einen Topf 3, wobei der Topf 3 einen Boden 4 (siehe Fig. 4) und eine vom Boden 4 abstehende und in einer Umfangsrichtung 5 umlaufende Wand 6 umfasst. Die Wand 6 des Topfes 3 weist eine entlang der Umfangsrichtung 5 bzw. eines Außenumfangs der Wand 6 verlaufende Topfverzahnung 7 auf, welche radial nach außen vorstehende Topfzähne 8 aufweist, wobei die Radialrichtung senkrecht zu einer Axialrichtung 9 verläuft und die Axialrichtung 9 insbesondere parallel zu einer Drehachse der Bremsscheibe 1 verläuft. Die Topfverzahnung 7 umfasst des Weiteren erste Topfzahnlücken 10 und zweite Topfzahnlücken 11, welche in Umfangsrichtung 5 abwechselnd zwischen je zwei benachbarten Topfzähnen 8 angeordnet sind. Der Reibring 2 weist eine Reibringöffnung 12 auf, der mittig im Reibring 2 angeordnet ist, wobei der Topf 3, insbesondere die Wand 6, konzentrisch in der Reibringöffnung 12 angeordnet sind. Hierbei steht die Topfverzahnung 7 mit einer Ringverzahnung 13 des Reibrings 2 in Eingriff, die an der Reibringöffnung 12 ausgebildet ist. Die Ringverzahnung 13 umfasst radial nach innen gerichtete Ringzähne 14, 15, wobei in der Umfangsrichtung 5 benachbarte Ringzähne 14, 15 jeweils von einer Ringzahnlücke 16 der Ringverzahnung 13 voneinander getrennt sind. Der Eingriff der Topfverzahnung 7 mit der Ringverzahnung 13 kommt dadurch zustande, dass die Topfzähne 8 jeweils mit einer solchen Ringzahnlücke 16 in Eingriff stehen, während die Ringzähne 14, 15 jeweils mit einer solchen Topfzahnlücke 10, 11 in Eingriff stehen. Dabei steht ein jeweiliger erster Ringzahn 14 der Ringverzahnung 13 mit einer solchen zugehörigen ersten Topfzahnlücke 10 in Eingriff, während ein jeweiliger zweiter Ringzahn 15 mit einer solchen zugehörigen zweiten Topfzahnlücke 11 in Eingriff steht.

Zur axialen Sicherung des Reibrings 12 und des Topfes 3 relativ zueinander ist an der jeweiligen ersten Topfzahnlücke 10 eine Auskerbung 17 ausgeformt, welche mittig bezüglich einer in Umfangsrichtung 5 verlaufenden Breite 18 der zugehörigen ersten Topfzahnlücke 10 angeordnet ist. Die jeweilige Auskerbung 17 steht radial nach außen ab und übergreift den zugehörigen, mit dieser ersten Topfzahnlücke 10 in Eingriff stehenden, ersten Ringzahn 14 an einem ersten axialen Ende 19 radial. Dadurch entsteht zwischen dem Topf 3 und dem Reibring 2 eine axiale Sicherung, so dass der Topf 3 relativ zum Reibring 2 in die axiale Richtung 9' nicht oder nur schwer bewegbar ist. Die Ausbildung der jeweiligen Auskerbung 17 am ersten axialen Ende 19 der zugehörigen ersten Topfzahnlücke 10 ist vorzugsweise durch ein spanloses Deformieren der ersten Topfzahnlücke 10 am ersten axialen Ende 19 realisiert. Dabei ist das erste axiale Ende 19 im gezeigten Beispiel das vom Boden 4 des Topfes 3 abgewandte axiale Ende der Topfverzahnung 7 bzw. der Ringverzahnung 13.

Durch die mit Hilfe der Auskerbungen 17 erreichte axiale Sicherung ist eine in einem gewissen Rahmen bzw. bis zu einer gewissen Ausdehnung elastische relative Bewegung des Reibrings 2 zum Topf 3 in axialer Richtung 9 möglich.

Zur Verstärkung der axialen Sicherung des Reibrings 2 relativ zum Topf 3 weist die jeweilige zweite Topfzahnlücke 11 an seinem ersten axialen Ende 19 eine Lasche 20 auf, die aus der jeweiligen zweiten Topfzahnlücke 11 freigeschnitten ist. Hierbei zeigt Fig. 1 die Bremsscheibe 1 in einem nicht gänzlich montierten bzw. hergestellten Zustand, bei dem die jeweilige Lasche 20 noch nicht deformiert ist. Die jeweilige Lasche 20 verläuft über die gesamte Breite 18 der zugehörigen zweiten Topfzahnlücke 11 und erstreckt sich darüber hinaus teilweise in die in der Umfangsrichtung 5 benachbarten Topfzähne 8 hinein.

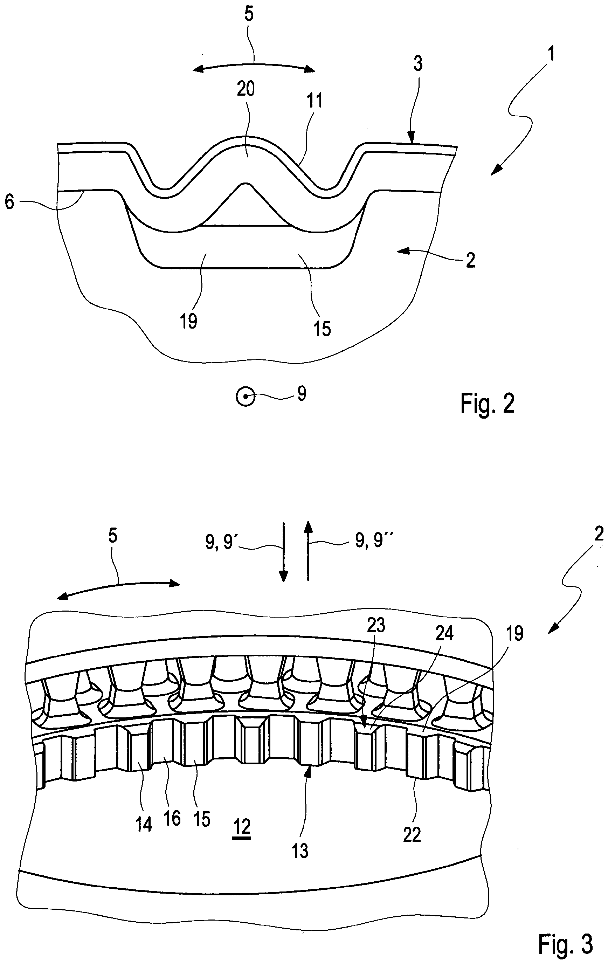

Fig. 2 zeigt eine solche Lasche 20 im fertig montierten Zustand der Bremsscheibe 1. Hierbei ist zu sehen, dass die Lasche 20 durch ein Deformieren, insbesondere ein Verstemmen radial nach außen absteht und somit den zugehörigen zweiten Ringzahn 15 am ersten axialen Ende 19 radial übergreift. Bei der in Fig. 2 gezeigten axialen Ansicht ist die Lasche 20 dabei W-förmig ausgebildet und übergreift den zugehörigen zweiten Ringzahn 15 somit lediglich in den in der Umfangsrichtung äußeren Bereichen. Durch die Kombination der Laschen 20 und der Auskerbungen 17, welche jeweils den zugehörigen Ringzahn 14, 15 am ersten axialen Ende 19 radial übergreifen, wird eine sowohl elastische als auch starke axiale Sicherung des Reibringes 2 relativ zum Topf 3 erreicht.

Um die Relativbewegung des Topfes 3 relativ zum Reibring 2 in die andere Axialrichtung 9" zu gewährleisten, ist bei der in Fig. 1 gezeigten Ausführungsform an der jeweiligen zweiten Topfzahnlücke 11 ein Vorsprung 21 vorgesehen, der radial nach außen absteht und den mit dieser zweiten Topfzahnlücke 11 in Eingriff stehenden zweiten Ringzahn 15 an einem zweiten axialen Ende 22 (siehe Fig. 3) radial übergreift, wobei das zweite axiale Ende 22 in den gezeigten Beispielen das dem Boden 4 zugewandte axiale Ende der Topfverzahnung 7 bzw. der Ringverzahnung 13 ist.

Wie in Fig. 3 zu sehen, weist der jeweilige erste Ringzahn 14 an seinem ersten axialen Ende 19 eine Fase 23 auf, wobei die jeweilige Fase 23 eine Kontur 24 aufweist, die gekrümmt ist. Dementsprechend übergreift die jeweilige Auskerbung 17 den zugehörigen ersten Ringzahn 14 im Bereich der zugehörigen Fase 23, so dass eine Kontaktfläche zwischen der Auskerbung 17 und dem zugehörigen ersten Ringzahn 14 vergrößert bzw. maximiert ist, um die axiale Sicherung, die durch das Zusammenwirken der jeweiligen Auskerbung 17 mit dem zugehörigen ersten Ringzahn 14 gegeben ist, zu vergrößern. Auch kann der jeweilige zweite Ringzahn 15 an seinem ersten axialen Ende eine entsprechende Aussparung aufweisen, in die die zugehörige Lasche 20 radial eingreift, um besagte axiale Sicherung zu verbessern.

Fig. 4 zeigt eine alternative Ausführungsform eines solchen Topfes 3, bei der im Vergleich zum in Fig. 1 gezeigten Topf 3 die Vorsprünge 21 am zweiten axialen Ende 22 der jeweiligen ersten Topfzahnlücke 10 radial nach außen ausgeformt sind. Zudem zeigt Fig. 4 den Topf 3 in einem Zustand, bei dem die Laschen 20 am ersten axialen Ende 19 bereits ausgeformt sind, während die Auskerbungen 17 an dem ersten axialen Ende 19 der ersten Topfzahnlücken 10, insbesondere durch spanloses Deformieren, noch nicht hergestellt sind. Ferner ist zu erkennen, dass die Wand 6 eine konische Form aufweist, derart dass die Wand 6 an dem dem Boden 4 benachbarten Ende einen kleineren Außendurchmesser aufweist als am vom Boden entfernten Ende.

## Patentansprüche

1. Bremsscheibe (1), insbesondere eines Kraftfahrzeuges, mit einem Topf (3), der einen Boden (4) und eine davon abstehende und umlaufende Wand (6) aufweist, und mit einem Reibring (2), der eine Reibringöffnung (12) aufweist, wobei
- die Wand (6) eine entlang eines Außenumfangs verlaufende Topfverzahnung (7) mit in radialer Richtung nach außen vorstehenden Topfzähnen (8) aufweist,
- in Umfangsrichtung (5) zwischen benachbarten Topfzähnen (8) je eine Topfzahnlücke (10, 11) angeordnet ist,
- der Reibring (2) an der Reibringöffnung (12) eine Ringverzahnung (13) aufweist, die radial nach innen vorstehende Ringzähne (14, 15) aufweist,
- wobei in Umfangsrichtung (5) zwischen benachbarten Ringzähnen (14, 15) je eine Ringzahnlücke (16) angeordnet ist,
- die Topfverzahnung (7) und die Ringverzahnung (13) in Eingriff stehen, wobei wenigstens einer ersten Topfzahnlücke (10) eine Auskerbung (17) ausgeformt ist, die radial nach außen absteht und den jeweiligen, mit dieser ersten Topfzahnlücke (10) in Eingriff stehenden Ringzahn (14, 15) an einem ersten axialen Ende (19) radial übergreift, **dadurch gekennzeichnet dass** an wenigstens einer zweiten Topfzahnlücke (11) eine Lasche (20) ausgeformt ist, die radial nach außen absteht und den jeweiligen, mit dieser zweiten Topfzahnlücke (11) in Eingriff stehenden Ringzahn (14, 15) an dem ersten axialen Ende (19) radial übergreift, wobei solche erste Topfzahnlücken (10) und solche zweite Topfzahnlücken (11) in Umfangrichtung (5) gleichmäßig abwechselnd zwischen jeweils benachbarten Topfzähnen (8) angeordnet sind.

2. Bremsscheibe nach Anspruch 1,
**dadurch gekennzeichnet,**
**dass** zumindest ein erster Ringzahn (14) an seinem ersten axialen Ende (19) eine Fase (23) aufweist.

3. Bremsscheibe nach Anspruch 2,
**dadurch gekennzeichnet,**
**dass** die Fase (23) des ersten Ringzahns (14) eine gekrümmte Kontur (24) aufweist.

4. Bremsscheibe nach einem der Ansprüche 1 bis 3,
**dadurch gekennzeichnet,**
**dass** die Lasche (20) sich entlang einer gesamten in Umfangsrichtung (5) verlaufenden Breite (18) einer solchen zugehörigen zweiten Topfzahnlücke (11) erstreckt.

5. Bremsscheibe nach einem der Ansprüche 1 bis 4,
**dadurch gekennzeichnet,**
**dass** die Auskerbung (17) mittig bezüglich der Breite (18) der zugehörigen ersten Topfzahnlücke (10) angeordnet ist.

6. Bremsscheibe nach einem der Ansprüche 1 bis 5,
**dadurch gekennzeichnet,**
**dass** an wenigstens einer solchen ersten Topfzahnlücke (10) und/oder an wenigstens einer solchen zweiten Topfzahnlücke (11) ein Vorsprung (21) ausgeformt ist, der radial nach außen absteht und den jeweiligen, mit dieser Topfzahnlücke (10, 11) in Eingriff stehenden Ringzahn (14, 15) an einem zweiten axialen Ende (22) radial übergreift.

7. Bremsscheibe nach einem der Ansprüche 1 bis 6,
**dadurch gekennzeichnet,**
**dass** die Wand (6) eine konische Form oder einen Axialabschnitt mit einer konischen Form aufweist.

## Claims

1. Brake disc (1), in particular of a motor vehicle, comprising a pot (3) having a base (4) and a continuous wall (6) projecting therefrom, and further comprising a friction ring (2) having a friction ring opening (12), wherein
- the wall (6) has a pot toothing system (7) extending along an outer circumference and having pot teeth (8) projecting outwards in the radial direction,
- a pot tooth gap (10, 11) each is located in the circumferential direction (5) between adjacent pot teeth (8),
- the friction ring (2) has a ring toothing system (13) having radially inward-projecting ring teeth (14, 15) at the friction ring opening (12),
- wherein a ring tooth gap (16) each is located in the circumferential direction (5) between adjacent ring teeth (14, 15)
- and the pot toothing system (7) and the ring toothing system (13) are in engagement,
- wherein in at least one first pot tooth gap (10), a notch (17), which projects radially outwards and radially encompasses the respective ring tooth (14, 15) in engagement with this first pot tooth gap (10) at a first axial end (19), is formed,
**characterised in that**
on at least one second pot tooth gap (11), a lug (20), which projects radially outwards and radially encompasses the respective ring tooth (14, 15) in engagement with this second pot tooth gap (11) at the first axial end (19), is formed, wherein such first pot tooth gaps (10) and such second pot tooth gaps (11) are evenly and alternately distributed in the circumferential direction (5) between adjacent pot teeth (8).

2. Brake disc according to claim 1,
**characterised in that**
at least one first ring tooth (14) has a chamfer (23) at its first axial end (19).

3. Brake disc according to claim 2,
**characterised in that**
the chamfer (23) of the first ring tooth (14) has a curved contour (24).

4. Brake disc according to any of claims 1 to 3,
**characterised in that**
the lug (20) extends along an entire width (18) in the circumferential direction (5) of such an associated second pot tooth gap (11).

5. Brake disc according to any of claims 1 to 4,
**characterised in that**
the notch (17) is located centrally in respect to the width (18) of the associated first pot tooth gap (10).

6. Brake disc according to any of claims 1 to 5,
**characterised in that**
on at least one such first pot tooth gap (10) and/or on at least one such second pot tooth gap (11), a projection (21), which projects radially outwards and radially encompasses the respective ring tooth (14, 15) in engagement with this pot tooth gap (10, 11) at a second axial end (22), is formed.

7. Brake disc according to any of claims 1 to 6,
**characterised in that**
the wall (6) has a conical shape or an axial section with a conical shape.

## Revendications

1. Disque de frein (1), en particulier d'un véhicule automobile, comprenant un pot (3) qui présente un fond (4) et une paroi (6) l'entourant et en étant éloigné et une bague de frottement (2) qui présente une ouverture de frottement (12),
- la paroi (6) présentant une denture (7) de pot s'étendant sur la circonférence extérieure ayant des dents (8) faisant saillie vers l'extérieur dans la direction radiale,
- dans la direction périphérique (5) entre les dents (8) adjacentes est aménagée un trou (10, 11) de dent,
- la bague de frottement (2) présentant une denture (13) annulaire sur l'ouverture (12) de bague de frottement qui présente des dents de frottement (14, 15) faisant saillie radialement vers l'intérieur,
- dans la direction périphérique (5) entre les dents (14, 15) annulaires adjacentes est aménagé un trou (16) de dent annulaire,
- la denture (79 de pot et la denture (13) annulaire étant engrenées,
au moins à partir d'un premier trou (10) de dent est formée une encoche (17) qui dépasse radialement vers l'extérieur et la dent annulaire (14, 15) respective engrenée avec ledit premier trou (10) de dent dépassant radialement au niveau d'une première extrémité (19) axiale, **caractérisé en ce que** sur au moins un second trou (11) de dent est formée une attache (20) qui fait saillie radialement vers l'extérieur et dépassant la dent annulaire (14, 15) engrenée avec ledit second trou (11) de dent au niveau de la première extrémité (19) axiale, de tels premiers trous (10) de dent et de tels seconds trous (11) de dent étant disposés dans la direction périphérique (5) régulièrement en alternance entre les dents (8) de pot adjacents respectifs.

2. Disque de frein selon la revendication 1, **caractérisé en ce qu'**au moins une première dent annulaire (14) présente sur sa première extrémité (19) axiale un chanfrein (23).

3. Disque de frein selon la revendication 2, le chanfrein (23) de la première dent annulaire (14) présentant un contour (24) incurvé.

4. Disque de frein selon l'une quelconque des revendications 1 à 3, **caractérisé en ce que** la bride (20) s'étend sur toute la largeur (18) dans la direction périphérique (5) d'un tel second trou (11) de dent correspondant.

5. Disque de frein selon l'une quelconque des revendications 1 à 4, **caractérisé en ce que** l'encoche (17) est disposée au centre par rapport à la largeur (18) du premier trou (10) de dent correspondant.

6. Disque de frein selon l'une quelconque des revendications précédentes 1 à 5, **caractérisé en ce que** sur au moins un tel premier trou (10) de dent et/ou sur un tel second trou (11) de dent est formée une saillie (21) qui fait saillie radialement vers l'extérieur, et dépasse radialement la dent annulaire (14, 15) engrenée avec ledit trou (10, 11) sur une seconde extrémité (22) axiale.

7. Disque de frein selon l'une quelconque des revendications 1 à 6, **caractérisé en ce que** la paroi (6) se présente sous forme conique ou d'une section axiale conique.
